# EUROPEAN PATENT SPECIFICATION

(11) **EP 3 886 271 B1**
(45) Date of publication and mention of the grant of the patent: **27.11.2024**
(21) Application number: 20172918.3
(22) Date of filing: 05.05.2020
(51) Int. Cl.: H01R 13/713, H01H 83/04, H01R 24/22, H01R 24/30, H01R 13/52, H01R 12/71

(54) **LEAKAGE PROTECTION DEVICE**
LECKAGESCHUTZVORRICHTUNG
DISPOSITIF DE PROTECTION CONTRE LES FUITES

(30) Priority: 27.03.2020 CN 202010229932
(43) Date of publication of application: 29.09.2021
(73) Proprietor: Suzhou ELE.MFG Co., Ltd., Suzhou 215125 (CN)
(72) Inventor: Li, Chengli, Suzhou 215125 (CN); Zhang, Xiaoming, Suzhou 215125 (CN); Nie, Shengyun, Suzhou 215125 (CN)
(74) Representative: Otten, Roth, Dobler & Partner mbB Patentanwälte

(56) References cited:
- CN-A- 101 483 297
- CN-U- 203 521 795
- DE-U- 7 034 601
- US-A- 6 122 155
- US-A1- 2008 094 764
- US-A1- 2018 166 242

## Description

### FIELD OF THE INVENTION

The present disclosure generally relates to the electrical field, in particular to a leakage protection device.

### BACKGROUND OF THE INVENTION

With the continuous improvement of people's awareness of electricity safety, leakage protection devices are used more and more widely, and then the application fields and the usage places of the leakage protection devices are also increased, which puts forward higher requirements for the development and manufacture of the leakage protection devices. Taking the leakage protection plug as an example, US2018166242A1 discloses a leakage current protection device comprising a circuit board, moving contact plates, insertion plates and a disconnect mechanism, the disconnect mechanism controls the moving contact plates. US6122155A discloses a mini appliance leakage current interrupter comprising a prong assembly, the prong assembly comprises first and second contact prongs which are in line mounted on the housing. Each contact prong is connected to an associated conductive bracket arm which, in turn, is positioned above a conductive contact arm. Contact arm is pivotally mounted within the housing and connected to the circuit.

In the prior art, the existing leakage protection plug has a larger volume due to the limitation of mechanical structure. When it needs to be used together with some small household appliances (such as hair dryers, dryers, etc.), the overall appearance of the product will be uncoordinated and the overall aesthetics of the product will be reduced. Moreover, due to the larger volume of the existing leakage protection plug, it will cannot be used normally under some limited conditions (such as in the standard socket waterproof case of the toilet), which will cause certain troubles to the users. In addition, due to the complicated structure and larger volume of the existing leakage protection plug, the manufacturing of the product is difficult and the cost is high. Therefore, it is necessary to develop and design new leakage protection devices to solve the defects as mentioned above.

### SUMMARY OF THE INVENTION

The object of the present disclosure is to provide a leakage protection device to further improve the use safety and to propose improvements based on the above factors to be considered.

To this end, according to the present disclosure, a leakage protection device is provided. The leakage protection device comprises a housing and a core assembly disposed in the housing. The core assembly comprises a control circuit board and an input assembly and an output assembly which are coupled to the control circuit board. The leakage protection device comprises a reset assembly and a test assembly, the reset assembly comprises a reset button disposed outside the housing, and the test assembly comprises a test button disposed outside the housing. The input assembly extends out of the housing in a first direction, the reset button and the test button are arranged on the outer peripheral surface of the housing parallel to the first direction so that the operation directions of the reset button and the test button are angled with the first direction.

According to the above technical concept, the present disclosure may further comprise any one or more of the following alternative embodiments.

In some alternative embodiments, the reset button and the test button are arranged in parallel on the outer peripheral surface of the housing along the first direction or perpendicular to the first direction.

In some alternative embodiments, the housing is configured to have a circular, square, rectangular or polygonal cross-sectional shape in a direction perpendicular to the first direction.

In some alternative embodiments, the output assembly extends out of the housing along a second direction on the surface of the housing where the input assembly, the reset button and the test button are not provided, and the second direction is parallel to or angled with the first direction.

In some alternative embodiments, the housing comprises a housing seat and a housing cover connected with each other, the housing cover is provided with an opening through which the reset button and the test button protrude, and the output assembly extends out of the housing seat or the housing cover.

According to the present invention, the leakage protection device further comprises a releasing assembly coupled to the control circuit board. The input assembly comprises a pair of elastic contact arms, each elastic contact arm is provided with a movable electrical contact. The output assembly comprises a pair of contact arms, each contact arm is provided with a static electrical contact to cooperate with the movable electrical contact. The releasing assembly is provided with a releaser for urging the movable electrical contact to engage with or disengage from the static electrical contact.

In some alternative embodiments, the output assembly comprises an output wiring device, and the output wiring device comprises an output wire coupled to the core assembly or a wiring assembly connected to the output wire.

According to the present invention, the leakage protection device further comprises a detection assembly coupled to the control circuit board, and the pair of elastic contact arms of the input assembly are coupled to a power supply terminal through the detection assembly.

In some alternative embodiments, the leakage protection device further comprises a releasing coil coupled to the control circuit board, and the pair of contact arms of the output assembly are limited, fixed and connected to the output wiring device via the releasing coil.

In some alternative embodiments, the output assembly further comprises a wire card coupled to the output wiring device, and the wire card is cooperatively connected with the housing.

According to the present disclosure, the buttons of the reset assembly and the test assembly in the leakage protection device are arranged on the outer peripheral surface of the housing parallel to the extension direction of the input assembly, so that the internal structure layout of the product is improved, and the volume of the product is greatly reduced while the use safety of the product is ensured. The production and processing efficiency of the product is improved, the cost is reduced, and the product is especially suitable for compact application environments.

### BRIEF DESCRIPTION OF THE DRAWINGS

Other features and advantages of the present disclosure will be better understood by the following detailed description of alternative embodiments in conjunction with the accompanying drawings, in which similar reference numerals designate the same or similar components, wherein:
Fig.1 is a schematic outline view of a leakage protection device according to a first embodiment of the present disclosure, wherein an output wiring device is arranged at an angle to an input end;
Fig.2 is a schematic outline view of the leakage protection device according to a second embodiment of the present disclosure, which is similar to Fig. 1 except that the output wiring device is arranged in parallel with the input end;
Fig.3 is a schematic outline view of the leakage protection device according to a third embodiment of the present disclosure, which is similar to Fig.1 except that a reset button and a test button are arranged at different positions on the outer peripheral surface in a direction parallel to the input end of the housing;
Fig.4 is a schematic outline view of the leakage protection device according to a fourth embodiment of the present disclosure, which is similar to Fig.3 except that the reset button and the test button are arranged at different positions on the outer peripheral surface in a direction parallel to the input end of the housing;
Fig.5 is an exploded schematic view of the leakage protection device of Fig. 1;
Fig.6 is a further exploded view of the leakage protection device of Fig.5;
Fig.7 is an exploded schematic view of a core assembly in the leakage protection device according to one embodiment of the present disclosure; and
Fig.8 is a schematic circuit diagram of the leakage protection device according to one embodiment of the present disclosure.

### DETAILED DESCRIPTION OF EMBODIMENTS

The implementation and use of the embodiments are discussed in detail below. However, it should be understood that the specific embodiments discussed merely exemplify specific ways of implementing and using the present disclosure, and do not limit the scope of the present disclosure. When describing the structural positions of various components, such as the directions of upper, lower, top, bottom, etc., the description is not absolute, but relative. When the various components are arranged as shown in the figures, these directional expressions are appropriate, but when the positions of the various components in the figures would be changed, these directional expressions would also be changed accordingly.

In this document, the terms "couple" and "connect" should be understood broadly. For example, "connect" can be a fixed connection, a detachable connection, or an integral connection; "couple" can be a direct connection or an indirect connection through an intermediate medium. For those of ordinary skill in the art, the specific meanings of the above terms in this document can be understood according to specific situations.

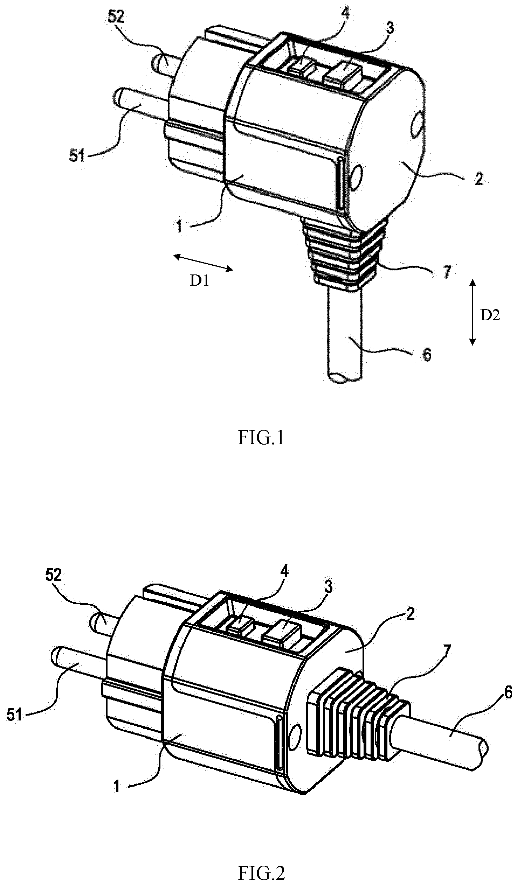

The concept of the present disclosure is to provide a product with reduced volume aiming at the problem that the existing leakage protection device is large in size and is not suitable for compact environment. Figs. 1 to 4 show leakage protection devices according to various alternative embodiments of the present disclosure. In the illustrated embodiments, a plug is taken as an example, however, it should be understood that any other leakage protection devices applicable to the concept of the present disclosure is not excluded.

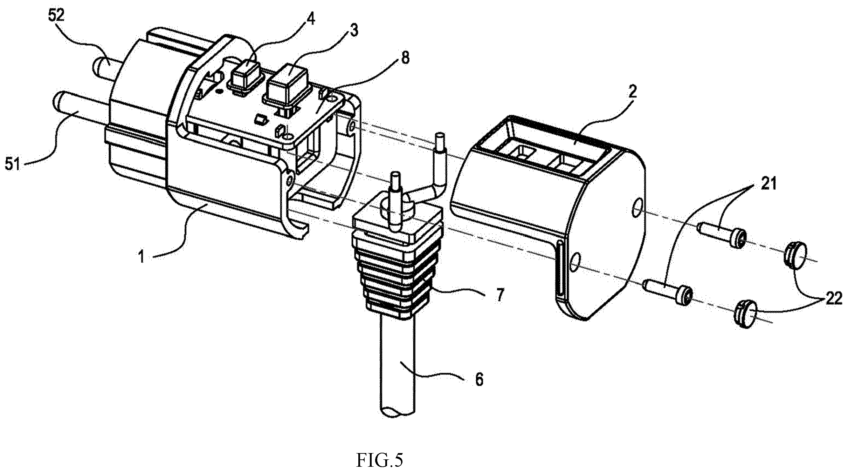

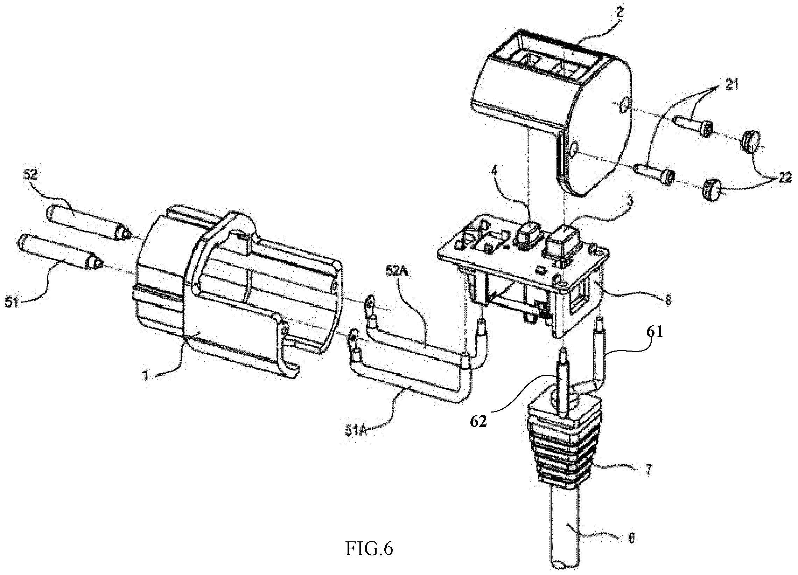

Referring to Figs. 1 to 6, the leakage protection device of the present disclosure includes a housing and a core assembly 8 disposed in the housing. The housing may include a housing base 1 and a housing cover 2 which are snap-fitted fixedly together by a plurality of fasteners or mechanical structures. In the illustrated embodiment, the fasteners may be screws 21 and screw plugs 22 exemplarily shown in Figs. 5 and 6. The core assembly 8 includes a control circuit board, an input assembly and an output assembly which are coupled to the control circuit board, thereby realizing electrical connection between the input end and the output end.

In the first embodiment shown in Fig. 1, the input assembly includes plug blades 51, 52 extending out of the housing base 1 of the housing in a first direction D1, and the output assembly includes an output wiring device 6 extending out of the housing base 1 of the housing in a second direction. The second direction may be parallel to or angled with the first direction D1. In this embodiment, the second direction is a direction D2 substantially perpendicular to the first direction D1, and the output assembly can further include a wire card 7 connected to the housing and extending out of the housing. The output wiring device 6 can realize electrical connection of the leakage protection device via the wire card 7, and has waterproof performance and improves bending resistance and service life of the output wiring device 6. It should be understood that the output wiring device 6 can include an output wire coupled to the core assembly or a wiring assembly connected to the output wire so that a user can freely connect the output wire.

In the second embodiment shown in Fig. 2, the output wiring device 6 extends out of the housing cover 2 of the housing in the second direction, that is, the second direction in which the output wiring device 6 extends out of the housing may be parallel to the first direction D1, thereby enabling the leakage protection device to be suitable for more application environments.

According to the present disclosure, the leakage protection device includes a rest assembly (RESET) and a test assembly (TEST), wherein the reset assembly is used for controlling the core assembly to turn on the power supply and includes a reset button 3 arranged outside the housing, and the test assembly is used for simulating and testing leakage current and includes a test button 4 arranged outside the housing. In the preferred embodiment, the reset button 3 and the test button 4 are arranged on the outer peripheral surface of the housing parallel to the first direction D1 so that the operation directions or working directions of the reset button 3 and the test button 4 can be angled with the first direction D1, that is, angled with the extension direction of the plug blades 51, 52 of the input assembly. Preferably, the operation directions of the reset button 3 and the test button 4 are configured to be perpendicular to the extension direction of the plug pieces 51, 52. For example, as shown in Figs.1 and 2, the operation directions of the reset button 3 and the test button 4 are configured as along the direction D2. In this way, the internal structure of the leakage protection device can be designed to be more compact, and after the plug pieces 51, 52 being inserted into the mating socket, the external whole of the leakage protection device would not occupy too much space.

In some embodiments, the reset button 3 and the test button 4 can be arranged in parallel on the outer peripheral surface of the housing along the first direction D1, as shown in Figs. 1 and 2. In some embodiments, the reset button 3 and the test button 4 can also be arranged in parallel on the outer peripheral surface of the housing perpendicular to the first direction D1, that is, in parallel around the outer peripheral surface of the housing. Alternatively, the outer periphery of the housing can be configured as various forms. For example, in some embodiments, the housing is configured to have a circular, square, rectangular or polygonal cross-sectional shape in a direction perpendicular to the first direction D1. For example, the polygonal cross-sectional shape is shown in the figures. It should be understood that, regardless of the shape of the housing, the output assembly should extend out of the housing on the surfaces without the plug blades 51, 52 of the input assembly and the reset button 3 and the test button 4, so as to ensure the normal operation of the reset button 3 and the test button 4 by the user while ensuring the electrical connection between the input end and the output end.

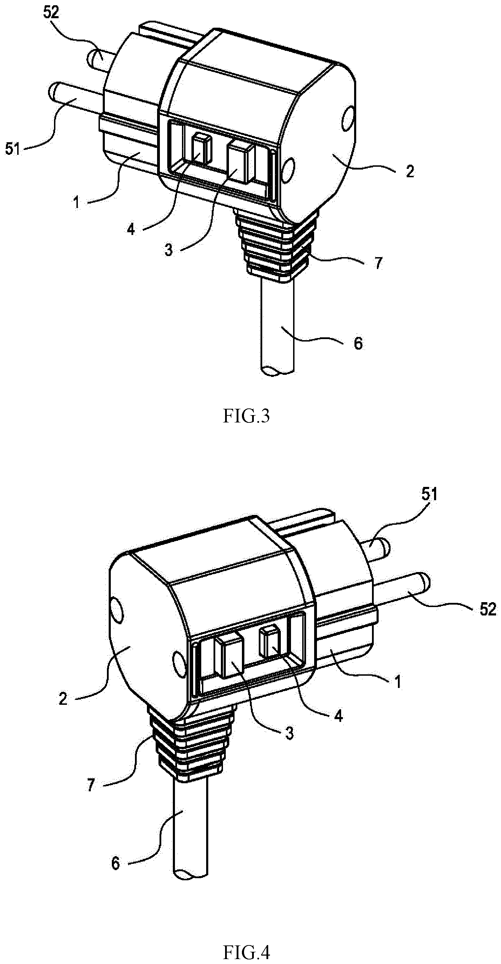

Therefore, in the third and fourth embodiments shown in Figs. 3 and 4, respectively, the housing is still configured to have a polygonal cross-sectional shape similar to that of Figs. 1 and 2, but the reset button 3 and the test button 4 can be disposed on either of the outer peripheral surfaces parallel to the first direction D1 as long as the surface does not conflict with the surface on which the output assembly is disposed.

As can be seen in Figs. 5 and 6, the housing cover 2 is provided with an opening through which the reset button 3 and the test button 4 protrude. In some alternative embodiments, the distance that the reset button 3 and the test button 4 protrude out of the opening can be configured to not exceed the outer peripheral surface of the housing, thus making the overall appearance of the product more beautiful and the size more compact. In the illustrated embodiment, the reset button 3 and the test button 4 are both configured as a substantially rectangular shape and have different sizes. In some embodiments, the reset button 3 and the test button 4 can also be designed in any other suitable shapes or sizes. For example, one or both of the two buttons may be circular, square or polygonal in shape, or the two buttons may have the same size.

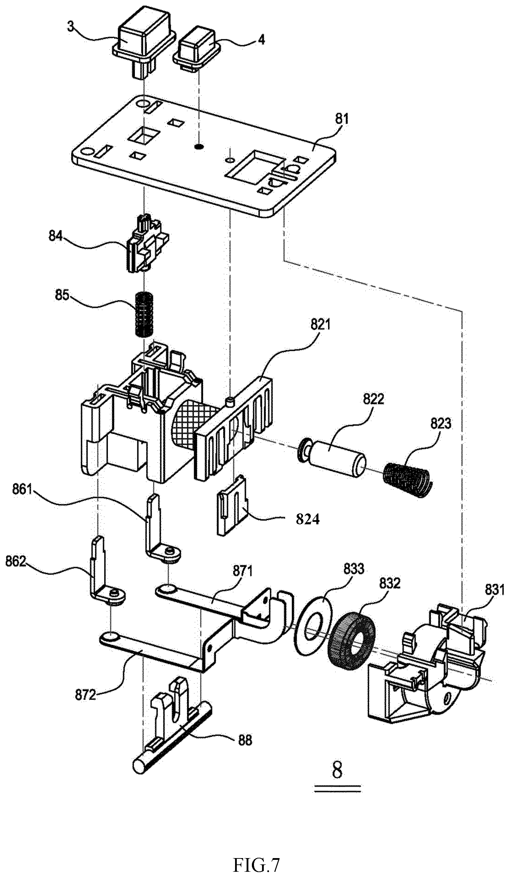

Referring to Figs. 6 and 7, in the leakage protection device, the input assembly includes a pair of elastic contact arms for connecting to a power supply. It should be understood that the input assembly may be other similar electrical coupling structures. Optionally, the input assembly can be L-elastic contact arm 871 and N-elastic contact arm 872 connected to the plug blades 51, 52 via plug connection wires 51A, 52A, and each elastic contact arm is provided with a movable electrical contact. Accordingly, the output assembly includes a pair of contact arms, which are optionally neutral (N) blade 861 and live wire (L) blade 862 connected to the output wiring device 6 through output connection wires 61, 62, and each contact arm is provided with a static electrical contact to cooperate with the movable electrical contact so as to form a switch. The core assembly 8 includes a control circuit board 81, a releasing assembly coupled to the control circuit board 81 and a detection assembly, wherein the N-blade 861, the L-blade 862, the L-elastic contact arm 871 and the N-elastic contact arm 872 are respectively fitted to the control circuit board 81.

As can be seen from Fig. 7, the N-blade 861 and the L-blade 862 of the output assembly are connected to the control circuit board 81 through corresponding positioning holes of the releasing coil 821. In some embodiments, the releasing assembly includes at least a releasing coil (SOL) 821, a releaser 88, a releasing iron core 822 and a releasing spring 823. The releasing iron core 822 and the releasing spring 823 are disposed in the releasing coil 821 and can be embedded through a coil baffle 824 to prevent the releasing iron core 822 and the releasing spring 823 from falling off. When the releasing coil 821 generates a magnetic field, the releasing iron core 822 will move along the channel in the releasing coil 821 under the action of the magnetic field force. The releaser 88 is used to cooperate with the releasing iron core 822 so as to move in a direction perpendicular to the movement direction of the releasing iron core 822, and then causing the L-elastic contact arm 871 and the N-elastic contact arm 872 of the input assembly overlapped on the two arms of the releaser 88 to deform and contact or engage with the N-blade 861 and the L-blade 862 to switch on the circuit, or vice versa, causing the L-elastic contact arm 871 and the N-elastic contact arm 872 to disengage from the N-blade 861 and the L-blade 862 to switch off the circuit.

Specifically, the reset assembly includes at least a reset lever 84 and a reset spring 85 which are cooperated with the releaser 88, wherein one end of the reset lever 84 is inserted into the reset button 3 through the control circuit board 81, and the other end is inserted into the reset spring 85. When the reset button 3 is pressed down, the reset lever 84 is buckled with the releaser 88, and the L-elastic contact arm 871 and the N-elastic contact arm 872 overlapped on the two arms of the releaser 88 can be lifted upward by the elasticity of the reset spring 85 to realize contact connection with the N-blade 861 and the L-blade 862, thereby obtaining electric power connection between the input end and the output end. If leakage current occurs, the releasing coil 821 generates a magnetic field, which drives the releasing iron core 822 to move and release the reset rod 84 from the releaser 88. The L-elastic contact arm 871 and the N-elastic contact arm 872 are disconnected from the N-blade 861 and the L-blade 862, thus cutting off the power connection between the input end and the output end.

As can be seen from Fig. 7, the L-elastic contact arm 871 and the N-elastic contact arm 872 are directly connected to the control circuit board 81 and the input end through the detection assembly. In some embodiments, the detection assembly includes at least a detection coil sheath 831, a detection coil (CT) 832 and a detection coil cover 833. The detection coil 832 and the detection coil cover 833 are disposed in the detection coil sheath 831. In this way, the detection coil 832 can detect whether leakage current exists between the phase lines of the L-elastic contact arm 871 and the N-elastic contact arm 872 of the input assembly passing therethrough, thereby driving the leakage protection device to connect or disconnect the power connection.

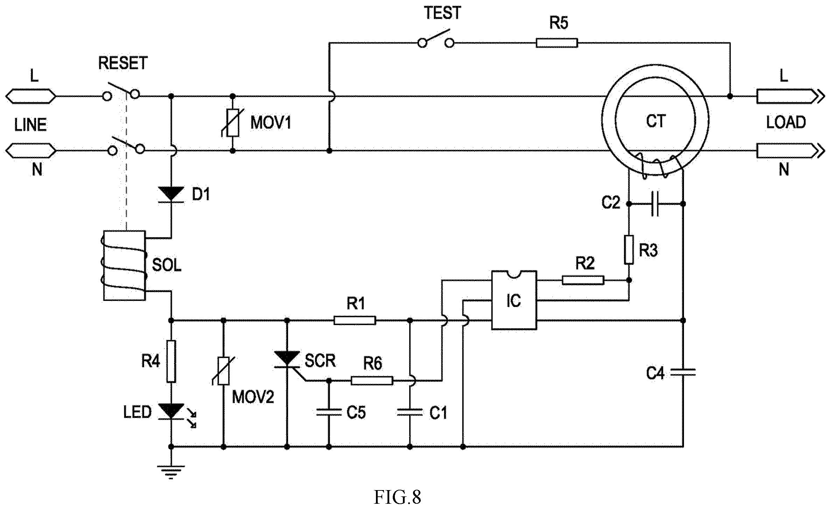

The operation principle of the leakage protection device of the present disclosure will be described below with reference to Fig. 8. When there is no leakage current in L and N phase lines, the power connection between the input end and the output end can be realized by pressing the RESET button. When the detection coil (CT) detects leakage current in L and N phase lines, the CT transmits the detected leakage current signal to the processor IC. If the leakage current exceeds the set value, the IC sends out a signal to drive the silicon controlled rectifier (SRC) to be conducted, so that the releasing coil SOL generates a magnetic field to drive the releasing iron core to move and disconnect the power connection between the input end and the output end.

It should be understood that the embodiments shown in the figures only illustrate the optional shapes, sizes and arrangements of various optional components of the leakage protection device according to the present disclosure; however, it is only for illustration and not limitation, and other shapes, sizes and arrangements may be adopted without departing from the spirit and scope of the present disclosure.

The technical contents and technical features of the present disclosure have been disclosed above. However, it can be understood that those skilled in the art can make various changes and improvements to the above disclosed concept under the creative idea of the present disclosure, but all fall within the protection scope of the present disclosure. The above description of the embodiments is illustrative rather than limiting, and the scope of protection of the present disclosure is determined by the claims.

## Claims

1. A leakage protection device comprising a housing and a core assembly (8) disposed in the housing, the core assembly (8) comprising a control circuit board and an input assembly and an output assembly which are coupled to the control circuit board (81), the leakage protection device comprising a reset assembly and a test assembly; the reset assembly comprising a reset button (3) disposed outside the housing, and the test assembly comprising a test button (4) disposed outside the housing; and the input assembly extending out of the housing in a first direction (D1), the reset button (3) and the test button (4) being arranged on the outer peripheral surface of the housing parallel to the first direction (D1) so that the operation directions of the reset button (3) and the test button (4) are angled with the first direction (D1);
wherein the leakage protection device further comprises a releasing assembly and a detection assembly coupled to the control circuit board (81); **characterized in that**, the input assembly comprises a pair of elastic contact arms (871, 872), each elastic contact arm is provided with a movable electrical contact; the output assembly comprises a pair of contact arms (861, 862), each contact arm is provided with a static electrical contact to cooperate with the movable electrical contact; and the releasing assembly is provided with a releaser (88) for urging the movable electrical contact to engage with or disengage from the static electrical contact, and the pair of elastic contact arms (871, 872) of the input assembly are coupled to a power supply terminal through the detection assembly.

2. The leakage protection device according to claim 1, wherein the reset button (3) and the test button (4) are arranged in parallel on the outer peripheral surface of the housing along the first direction (D1) or perpendicular to the first direction (D1).

3. The leakage protection device according to claim 1 or 2, wherein the housing is configured to have a circular, square, rectangular or polygonal cross-sectional shape in a direction perpendicular to the first direction (D1).

4. The leakage protection device according to claim 1 or 2, wherein the output assembly extends out of the housing along a second direction (D2) on the surface of the housing where the input assembly, the reset button (3) and the test button (4) are not provided, and the second direction (D2) is parallel to or angled with the first direction (D1).

5. The leakage protection device according to claim 4, wherein the housing comprises a housing seat (1) and a housing cover (2) connected with each other, the housing cover (2) is provided with an opening through which the reset button (3) and the test button (4) protrude, and the output assembly extends out of the housing seat (1) or the housing cover (2).

6. The leakage protection device according to claim 1 or 2, wherein the output assembly comprises an output wiring device (6), and the output wiring device (6) comprises an output wire coupled to the core assembly (8) or a wiring assembly connected to the output wire.

7. The leakage protection device according to claim 6, wherein the leakage protection device further comprises a releasing coil (821) coupled to the control circuit board (81), and a pair of contact arms (861, 862) of the output assembly are limited, fixed and connected to the output wiring device (6) via the releasing coil (821).

8. The leakage protection device according to claim 6, wherein the output assembly further comprises a wire card (7) coupled to the output wiring device (6), and the wire card (7) is cooperatively connected with the housing.

## Patentansprüche

1. Leckageschutzvorrichtung, umfassend ein Gehäuse und eine in dem Gehäuse angeordnete Kernbaugruppe (8), wobei die Kernbaugruppe (8) eine Steuerplatine und eine Eingangsbaugruppe und eine Ausgangsbaugruppe umfasst, die mit der Steuerplatine (81) gekoppelt sind, wobei die Leckageschutzvorrichtung eine Rückstellbaugruppe und eine Testbaugruppe umfasst; wobei die Rückstellbaugruppe eine außerhalb des Gehäuses angeordnete Rückstelltaste (3) umfasst und die Testbaugruppe eine außerhalb des Gehäuses angeordnete Testtaste (4) umfasst; und wobei sich die Eingangsbaugruppe in einer ersten Richtung (D1) aus dem Gehäuse heraus erstreckt, wobei die Rückstelltaste (3) und die Testtaste (4) auf der äußeren Umfangsfläche des Gehäuses parallel zur ersten Richtung (D1) angeordnet sind,
wobei die Leckageschutzvorrichtung ferner eine Ablösebaugruppe und eine mit der Steuerplatine (81) gekoppelte Detektionsbaugruppe umfasst; wobei die Eingangsbaugruppe ein Paar elastischer Kontaktarme (871, 872) umfasst, wobei jeder elastische Kontaktarm mit einem beweglichen elektrischen Kontakt versehen ist; wobei die Ausgangsbaugruppe ein Paar Kontaktarme (861, 862) umfasst, wobei jeder Kontaktarm mit einem statischen elektrischen Kontakt versehen ist, um mit dem beweglichen elektrischen Kontakt zusammenzuwirken; und wobei die Ablösebaugruppe mit einem Ablöser (88) versehen ist, um den beweglichen elektrischen Kontakt dazu zu veranlassen, mit dem statischen elektrischen Kontakt in Eingriff zu treten oder von diesem außer Eingriff zu gelangen, und wobei das Paar elastischer Kontaktarme (871, 872) der Eingangsbaugruppe über die Detektionsbaugruppe mit einem Stromversorgungsanschluss verbunden ist.

2. Leckageschutzvorrichtung gemäß Anspruch 1, wobei die Rückstelltaste (3) und die Testtaste (4) parallel auf der äußeren Umfangsfläche des Gehäuses entlang der ersten Richtung (D1) oder senkrecht zur ersten Richtung (D1) angeordnet sind.

3. Leckageschutzvorrichtung gemäß Anspruch 1 oder 2, wobei das Gehäuse so konfiguriert ist, dass es in einer Richtung senkrecht zur ersten Richtung (D1) eine kreisförmige, quadratische, rechteckige oder polygonale Querschnittsform aufweist.

4. Leckageschutzvorrichtung gemäß Anspruch 1 oder 2, wobei sich die Ausgangsbaugruppe entlang einer zweiten Richtung (D2) auf der Oberfläche des Gehäuses aus dem Gehäuse heraus erstreckt, auf der die Eingangsbaugruppe, die Rückstelltaste (3) und die Testtaste (4) nicht vorgesehen sind, und wobei die zweite Richtung (D2) parallel zur oder abgewinkelt zur ersten Richtung (D1) verläuft.

5. Leckageschutzvorrichtung gemäß Anspruch 4, wobei das Gehäuse einen Gehäusesitz (1) und einen Gehäusedeckel (2) umfasst, die miteinander verbunden sind, wobei der Gehäusedeckel (2) mit einer Öffnung versehen ist, durch die die Rückstelltaste (3) und die Testtaste (4) herausragen, und wobei sich die Ausgangsbaugruppe aus dem Gehäusesitz (1) oder dem Gehäusedeckel (2) heraus erstreckt.

6. Leckageschutzvorrichtung gemäß Anspruch 1 oder 2, wobei die Ausgangsbaugruppe eine Ausgangsverdrahtungseinrichtung (6) umfasst, und wobei die Ausgangsverdrahtungseinrichtung (6) einen mit der Kernbaugruppe (8) gekoppelten Ausgangsdraht oder eine mit dem Ausgangsdraht verbundene Verdrahtungsbaugruppe umfasst.

7. Leckageschutzvorrichtung gemäß Anspruch 6, wobei die Leckageschutzvorrichtung ferner eine mit der Steuerplatine (81) gekoppelte Ablösespule (821) umfasst, und wobei ein Paar Kontaktarme (861, 862) der Ausgangsbaugruppe über die Ablösespule (821) begrenzt, fixiert und mit der Ausgangsverdrahtungseinrichtung (6) verbunden sind.

8. Leckageschutzvorrichtung gemäß Anspruch 6, wobei die Ausgabebaugruppe ferner eine mit der Ausgangsverdrahtungseinrichtung (6) gekoppelte Drahtkarte (7) umfasst, und wobei die Drahtkarte (7) mit dem Gehäuse zusammenwirkend verbunden ist.

## Revendications

1. Dispositif de protection contre les fuites, comprenant un boîtier et un ensemble central (8) disposé dans le boîtier, l'ensemble central (8) comprenant une carte de circuit de commande ainsi qu'un ensemble d'entrée et un ensemble de sortie qui sont couplés à la carte de circuit de commande (81), le dispositif de protection contre les fuites comprenant un ensemble de réinitialisation et un ensemble de test ; l'ensemble de réinitialisation comprenant un bouton de réinitialisation (3) disposé à l'extérieur du boîtier, et l'ensemble de test comprenant un bouton de test (4) disposé à l'extérieur du boîtier ; et l'ensemble d'entrée s'étendant hors du boîtier dans une première direction (D1), le bouton de réinitialisation (3) et le bouton de test (4) étant agencés sur la surface périphérique extérieure du boîtier parallèlement à la première direction (D1) de telle sorte que les directions de fonctionnement du bouton de réinitialisation (3) et du bouton de test (4) soient inclinées par rapport à la première direction (D1) ;
le dispositif de protection contre les fuites comprenant en outre un ensemble de déclenchement et un ensemble de détection couplés à la carte de circuit de commande (81) ;
**caractérisé en ce que** :
l'ensemble d'entrée comprend une paire de bras de contact élastiques (871, 872), chaque bras de contact élastique étant muni d'un contact électrique mobile ; l'ensemble de sortie comprend une paire de bras de contact (861, 862), chaque bras de contact étant muni d'un contact électrique statique qui coopère avec le contact électrique mobile ; et l'ensemble de déclenchement est muni d'un déclencheur (88) pour pousser le contact électrique mobile à s'engager contre le contact électrique statique ou à se dégager de celui-ci, et la paire de bras de contact élastiques (871, 872) de l'ensemble d'entrée est couplée à une borne d'alimentation électrique par l'intermédiaire de l'ensemble de détection.

2. Dispositif de protection contre les fuites selon la revendication 1, dans lequel le bouton de réinitialisation (3) et le bouton de test (4) sont agencés parallèlement sur la surface périphérique extérieure du boîtier le long de la première direction (D1) ou perpendiculairement à la première direction (D1).

3. Dispositif de protection contre les fuites selon la revendication 1 ou 2, dans lequel le boîtier est configuré pour avoir une forme de section transversale circulaire, carrée, rectangulaire ou polygonale dans une direction perpendiculaire à la première direction (D1).

4. Dispositif de protection contre les fuites selon la revendication 1 ou 2, dans lequel l'ensemble de sortie s'étend hors du boîtier le long d'une seconde direction (D2) sur la surface du boîtier où l'ensemble d'entrée, le bouton de réinitialisation (3) et le bouton de test (4) ne sont pas situés, et la seconde direction (D2) est parallèle à la première direction (D1) ou inclinée par rapport à celle-ci.

5. Dispositif de protection contre les fuites selon la revendication 4, dans lequel le boîtier comprend un siège de boîtier (1) et un couvercle de boîtier (2) reliés l'un à l'autre, le couvercle de boîtier (2) est muni d'une ouverture par laquelle le bouton de réinitialisation (3) et le bouton de test (4) font saillie, et l'ensemble de sortie s'étend hors du siège de boîtier (1) ou du couvercle de boîtier (2).

6. Dispositif de protection contre les fuites selon la revendication 1 ou 2, dans lequel l'ensemble de sortie comprend un dispositif de câblage de sortie (6), et le dispositif de câblage de sortie (6) comprend un fil de sortie couplé à l'ensemble central (8) ou un ensemble de câblage relié au fil de sortie.

7. Dispositif de protection contre les fuites selon la revendication 6, le dispositif de protection contre les fuites comprenant en outre une bobine de déclenchement (821) couplée à la carte de circuit de commande (81), et une paire de bras de contact (861, 862) de l'ensemble de sortie étant limitée, fixée et reliée au dispositif de câblage de sortie (6) par l'intermédiaire de la bobine de déclenchement (821).

8. Dispositif de protection contre les fuites selon la revendication 6, dans lequel l'ensemble de sortie comprend en outre une carte de fils (7) couplée au dispositif de câblage de sortie (6), et la carte de fils (7) est reliée de manière coopérative au boîtier.
